# EUROPEAN PATENT APPLICATION

(11) **EP 4 123 169 A1**
(43) Date of publication of application: **25.01.2023**
(21) Application number: 21186329.5
(22) Date of filing: 19.07.2021
(51) Int. Cl.: F03D 9/19, F03D 13/20

(54) **WIND TURBINE WITH ELECTROLYTIC UNIT HOUSED INSIDE THE TOWER**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

A wind turbine (1) comprising a generator (2), a base (5), a nacelle (6), a tower (4) having a first end mounted to the base (5) and a second end supporting the nacelle (6), and an electrolytic unit (3) electrically powered by the generator (2) to produce hydrogen (6) from an input fluid (9), in particular water, wherein the electrolytic unit (3) is electrically coupled to the generator (2) by means of an electric connection (7), wherein the electrolytic unit (3) is housed inside the tower (4).

## Description

The present invention relates to a wind turbine with an electrolytic unit housed inside the tower. The present invention further relates to a method of producing hydrogen by means of such a wind turbine.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. These locations can be remote onshore locations or offshore locations on the sea. For the transportation of the electrical energy, the power generated by the generator of the wind turbine travels to a transmission substation of the wind farm, where it is converted to high voltage, usually between 130-765kV, for long distance transmission on the transmission grid over power lines. The transmission grid connects the remote location of the wind farm to a transformer station of the electrical grid, which transforms the electricity to a voltage compatible with the electrical grid.

A problem of remote wind farms is that the distance between the wind farm and the transformer station of the electrical grid needs to be bridged. Long power lines with very high installation costs are required.

The current development of the technology of wind turbines tends to an increased size of wind turbines for harvesting more wind energy, with longer blades and higher towers. Due to the increasing size of wind turbines, more power is supplied to the grid which is to be transported from the wind farm to the nearest input point of the grid. Increasing the power transferred over the long-distance power lines results in higher requirements for the cables and higher costs.

To reduce the amount of energy transferred by the power lines of the transmission grid or to avoid the use of long-distance power lines completely, an electrolytic unit can be installed in the vicinity of the wind turbine. A wind turbine comprising an electrolytic unit generates electrical power by means of the generator and hydrogen by means of the electrolytic unit driven by at least a part of the power of the wind turbine.

Electrolytic units are power-to-gas units configured to produce hydrogen. Hence, the energy produced by the wind turbine may be used in an electrolysis process to generate hydrogen and oxygen. These gases can be used afterwards for the generation of electrical energy in fuel cells or to produce chemicals, such as ammonia or methane. The produced gases from the electrolytic unit can be transported by using a pipeline or by pressurizing the gas into a container, which is less expensive than transporting electricity directly over long-distance power lines.

The use of electrolytic units in combination with wind turbines is known from the prior art, for example in the document US 5,592,028 A, where a plurality of electrolysis cells are connected to a wind farm and produce hydrogen by means of the electricity produced by the generators of the wind turbines.

The electrolytic unit is usually installed on an electrolytic unit platform open to the atmosphere. Due to the harsh environmental conditions of wind turbine locations, the components of the electrolytic unit are exposed to rain and dirt, as well as to salt for offshore wind turbines installed at the sea. This results in a fast corrosion of the metals of the components. In order to prevent corrosion, components of the wind turbine installed comprising metallic parts exposed to the atmosphere, such as an electrolytic unit installed on an electrolytic unit platform of the wind turbine, are usually housed in big containers. However, the use of containers increases the weight of the wind turbine and the material costs and makes the maintenance of the components difficult. Additionally, by opening the containers for inspection and maintenance of the parts housed inside, these parts are exposed to the atmosphere. For the case of offshore wind turbines, the electrolytic units arranged on electrolytic unit platforms are additionally exposed to the high levels of salt in the atmosphere.

It is an object of the invention to provide a wind turbine with an electrolytic unit protected from the harsh weather conditions and/or from a corrosive environment that overcomes the problems known form the prior art.

This is achieved by a wind turbine according to claim 1 and a method of producing hydrogen by means of a wind turbine according to claim 12.

According to the invention, a wind turbine comprises a generator, a base, a nacelle, a tower having a first end mounted to the base and a second end supporting the nacelle, and an electrolytic unit electrically powered by the generator to produce hydrogen from an input fluid, in particular water, wherein the electrolytic unit is electrically coupled to the generator by means of an electric connection.

The generator generates electric power and supplies the electrolytic unit with at least a part of the power generated, as both components are electrically coupled by means of the electric connection.

Due to the fluctuation of the power generation, depending for example on weather conditions and wind levels, it is difficult to foresee the power output of a wind turbine to the electricity grid or to an energy storage device. By using a part of the energy produced by the generator to produce hydrogen, the fluctuations can be mitigated. The hydrogen can be taken out of the wind turbine by a system outlet coupled to the output of the electrolytic unit.

Hence, at least a part of the energy produced by the generator can be used to power an electrolytic unit, so that the electricity grid is not overloaded by peaks of power generation of the fluctuating power generation facility. Additionally, if a problem in the output to the electricity grid occurs, the power can be redirected completely to the electrolytic unit so that only hydrogen, is produced. The hydrogen produced is usually in a gaseous state, which can be compressed and/or mixed with other components to a liquid state which is easier to store and/or transport.

The electrolytic unit can also be a mixed gas generator which performs electrolysis and generates other gases. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the hydrogen and gives it a flame speed up to eight times higher than compressed natural gas.

The electrolytic unit is used to produce hydrogen from water. Hence, the wind turbine can be installed in the vicinity of water, i.e. a river, a lake or at the sea and the electrolytic unit can use this water as an input to the electrolytic unit to produce hydrogen and oxygen. It is also possible to further process the hydrogen and get other compounds, such as methane or ammonia.

According to the invention, the electrolytic unit is housed inside the tower. Housing the electrolytic unit inside the tower has the advantage that the closed structure of the tower protects the electrolytic unit against harsh weather conditions and against corrosive environments. The electrolytic unit is very sensitive to harsh environments, for example rain, due to the electrical and metal components it comprises.

Additionally, the constant exposure to an open atmosphere containing salt, which greatly accelerates the corrosion, is avoided for wind turbines, in particular offshore wind turbines installed at the sea, with an electrolytic unit housed inside the tower. The need of big containers protecting the electrolytic unit such as the ones known from electrolytic units installed on electrolytic unit platforms outside the tower can be avoided by arranging the electrolytic unit inside the tower.

According to a preferred embodiment of the invention, the electrolytic unit is housed in the upper part of the tower, in particular in the upper third of the tower. The arrangement of the electrolytic unit at this height is beneficial, as the higher the electrolytic unit is placed, the lower the salt and water content in the air, thereby reducing the corrosion of the components of the electrolytic unit. Additionally, the electric connection between the generator and the electrolytic unit is shorter the higher the electrolytic unit is arranged at the tower, which reduces the costs of the cables for the power transmission and for the control equipment. This cables have a high cost due to the high current generated by the generator. Hence, using shorter cables considerably reduces the costs of the electrical equipment.

According to another preferred embodiment of the invention, the electrolytic unit is suspended from a yaw bearing. The electrolytic unit can be arranged on a floor plate or a structure supporting it at the yaw bearing. The electrolytic unit can be supported by the components of the yaw bearing coupled to the tower or by the components of the yaw bearing coupled to the nacelle.

According to another preferred embodiment of the invention, the electrolytic unit is rotatably coupled to the nacelle. This is beneficial to avoid any cable twisting of the electrical connection between the electrolytic unit and the generator, as both components rotate together during the yawing process. Additionally, the cables used for the electric connection already have a high cost due to the high currents transmitted by them, so if the cables also need to endure twisting, the costs rise even more.

For example, the electrolytic unit can be suspended from the yaw bearing and coupled to the nacelle, while at the same time being housed in the upper part of the tower. This is particularly advantageous due to the above-mentioned benefits of these features.

According to another preferred embodiment of the invention, the electrolytic unit is coupled to and supported by the tower. Even if the cables used for the electric connection have to endure twisting, the benefit of coupling the electrolytic unit directly at the tower is that the electrolytic unit does not rotate during yawing. For sensitive equipment this is beneficial to avoid any damages. Additionally, the fluid supply connections and the hydrogen output connection do not need to endure twisting if the electrolytic unit is directly supported by the tower.

According to another preferred embodiment of the invention, the electric connection is long enough to allow for a relative movement between the nacelle and the tower during yawing. The length of the electric connection is chosen in such a way that a relative movement between the generator and the electrolytic unit does not stress and damage the cables connecting the two units. Supports for the cables can be arranged at the tower so that the cables do not touch the ground and to avoid any injuries of stepping on cables.

According to another preferred embodiment of the invention, the electrolytic unit is supported on a floor plate. The electrolytic unit can be supported on multiple floor plates. The floor plates can be coupled to the tower or to the nacelle.

According to another preferred embodiment of the invention, said wind turbine is an offshore wind turbine erected in a body of water.

The electrolytic unit is used to produce hydrogen from water. Hence, the wind turbine can be installed in the vicinity of water and the water is extracted by means of the fluid supply assembly. By erecting the turbine on a body of water directly, the input fluid does not have to be transported to the wind turbine location, as it is available on-site. Proper filtering and cleaning of the water might be needed prior of using the water for the electrolysis.

According to another preferred embodiment of the invention, the wind turbine is configured as a floating wind turbine, wherein the base is a floating, a semi-submerged or a submerged base platform.

The base is a floating, a semi-submerged or a submerged base platform which may be suitable for deep waters. The type of base platform can be selected from the group consisting of a floater, a tensioned-leg platform TLP or a semi-submersible platform.

The base platform can be anchored to an underwater ground to limit the freedom of movement of the floating offshore wind turbine in horizontal directions, i.e. in directions which are substantially parallel to the surface of the water. Floating offshore bases have typically no fixed vertical positions to be able to compensate sea level variations. For the anchoring, it is possible to use at least one cable or chain, typically a plurality of chains, cables or lines, the latter also called moorings in the nautical context.

According to another preferred embodiment of the invention, said wind turbine further comprises a fluid supply assembly for supplying the input fluid from a fluid inlet arranged below a water level to the electrolytic unit, wherein the fluid inlet comprises an opening in the base or in the tower below the water level through which the input fluid is transported to the electrolytic unit.

Hence, the fluid supply assembly supplies the input fluid from a fluid inlet configured to be arranged below a water level to the electrolytic unit arranged above the water level, for example by means of a pump configured to pump the input fluid from the body of water and through the fluid connection between the fluid inlet and the electrolytic unit.

The water is extracted by means of the fluid supply assembly.

Hence, the base or the tower has an opening or a hole to collect the water. The location of the opening at the base or at the tower should be chosen in such a way that the opening is always submerged below the water level, considering the tidal movements of the water.

According to another preferred embodiment of the invention, the base is a foundation such as a monopile.

The base is a foundation which may be suitable for shallow and/or intermediate deep waters, such as in coastal waters.

The type of foundation can be selected from the group consisting of a monopile foundation, a jacket frame foundation, a tripod foundation, a gravity base foundation, a suction bucket formation, a tubular truss foundation or a tri-pile foundation.

Hence, the offshore wind turbine is connected to the seabed or to the bed of the body of water by means of the foundation.

According to another preferred embodiment of the invention, an overpressure is generated at the tower to avoid any hydrogen gas accumulations. This is beneficial to avoid any explosive gaseous mixtures inside the tower, which could lead to serious injuries of workers and damage of equipment.

Yet another aspect of the invention relates to a method of producing hydrogen by means of a wind turbine according to any of the preceding claims, the method comprising the step of supplying electrical power from the generator to the electrolytic unit housed inside the tower to produce hydrogen.

In order to facilitate the understanding of the characteristics of the invention and being an integral part of this specification, some drawing sheets are attached on which figures, with an illustrative but not limiting character, the following is represented:
Figure 1 shows a schematic view of a wind turbine as known in the prior art comprising a platform and an electrolytic unit installed on the platform.
Figure 2 shows a wind turbine according to an embodiment of the invention comprising an electrolytic unit housed inside the tower and coupled to the tower.
Figure 3 shows a wind turbine according to another embodiment of the invention comprising an electrolytic unit housed inside the tower and suspended from the yaw bearing.

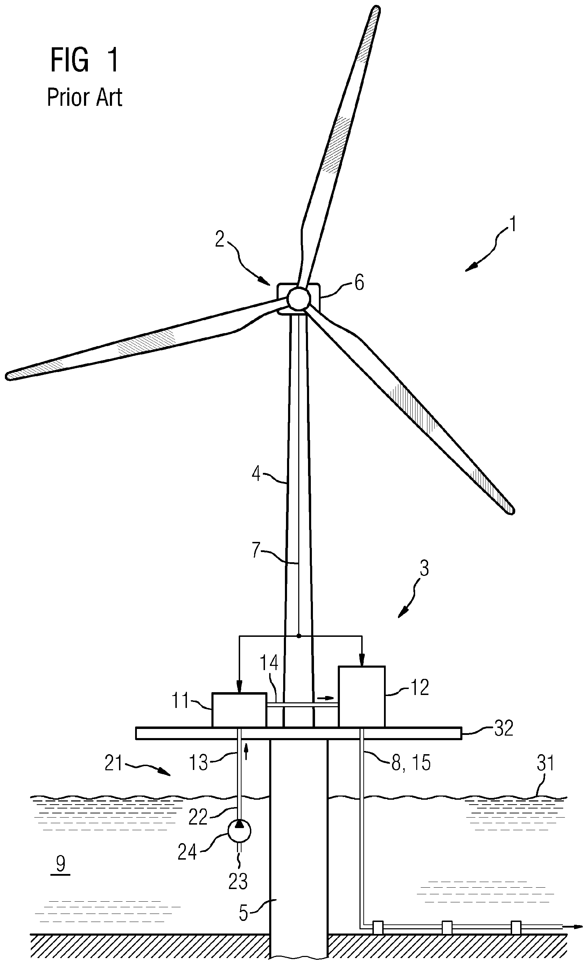

Figure 1 shows a schematic view of a wind turbine 1 as known in the prior art comprising an electrolytic unit platform 32 and an electrolytic unit 3 installed on the electrolytic unit platform 32.

The wind turbine 1 comprises a tower 4 on top of which a nacelle 6 is rotatably mounted. The wind turbine 1 further comprises a hub which is connected to the nacelle 6. A plurality of blades is mounted on the hub. The hub is connected to a generator 2 and is rotatably mounted about a rotor axis by means of a main bearing. The wind turbine 1 further comprises an electrolytic unit platform 32 on which the electrolytic unit 3 is arranged above the water level 31. The wind turbine 1 further comprises a base 5 on which the tower 4 is mounted. The base 5 is a foundation mounted to the floor of the body of water.

The power produced by the generator 2 is completely transferred to the electrolytic unit 3, but it would be also possible to connect the wind turbine 1 to an electricity grid and transfer a part of the power produced by the generator 2 to the electricity grid. The electrolytic unit 3 comprises a desalination unit 11 and an electrolytic device 12, as well as a fluid connection between the desalination unit 11 and the electrolytic device 12 through which desalinated water 14 is transported. The electrolytic device 12 and the desalination unit 11 are both powered by the generator 2, which is connected to both devices by means of an electric connection 7.

The input fluid 9 for the electrolytic unit 3 is saltwater 13 taken of the sea of the wind turbine 1 by means of a pump 24. The fluid supply assembly 21 supplies saltwater 13 to the electrolytic unit 3 by means of a hanging hose. The hose hangs from the desalination unit 11 to the water body at the outer part of the base 5. The saltwater 13 enters the fluid supply assembly 21 through a fluid inlet 23 and is transported through the hose, which creates a fluid connection 22 between the fluid inlet 23 and the desalination unit 11 forming part of the electrolytic unit 3. The fluid inlet 23 and the pump 24 are submerged below the water level 31 to suction the saltwater 13.

The desalinated water 14 is the input fluid 9 of the electrolytic device 12. The electrolytic device has a hydrogen output 15 through which the hydrogen 8 generated is extracted. This hydrogen output 15 is connected to a hydrogen pipeline to transport the hydrogen 8 onshore. Alternatively, the hydrogen 8 could be filled in containers and transported onshore.

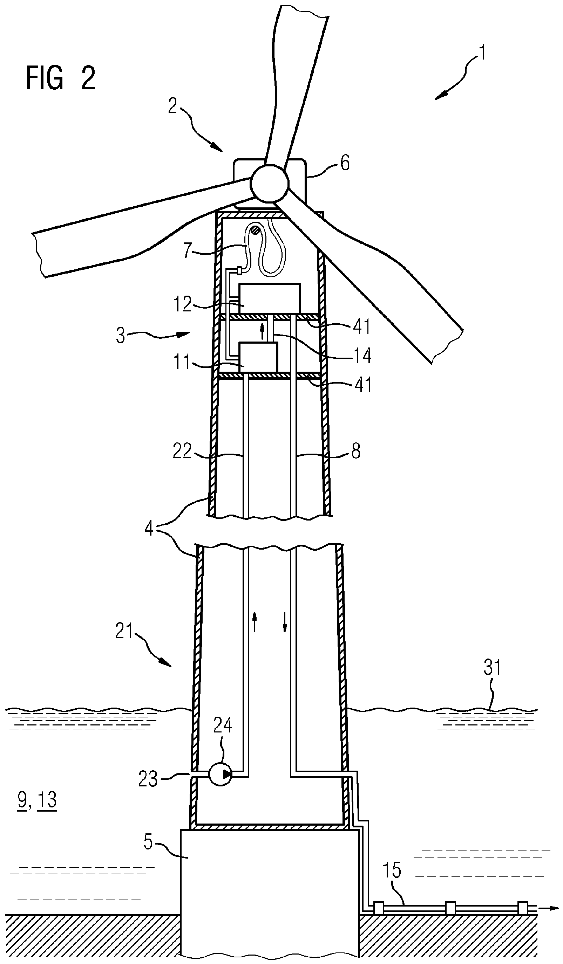

Figure 2 shows a wind turbine 1 according to an embodiment of the invention comprising an electrolytic unit 3 housed inside the tower 4 and coupled to the tower 4.

In this embodiment, the wind turbine 1 is an offshore wind turbine erected in a body of water and comprising a base 5 on which the tower 4 is mounted. The base 5 is a foundation, such as a monopile, mounted to the floor of the body of water.

An opening at the tower 4 allows for the suctioning of the saltwater 13 by means of the pump 24 of the fluid supply assembly 21 and the fluid inlet 23 arranged below the water level 31. The fluid connection 22 through the tower 4 can be formed as a channel or as a pipeline. The fluid connection 22 extends in the longitudinal direction parallel to the axis of the tower 4 towards the electrolytic unit 3 of the wind turbine 1.

The electrolytic unit 3 is housed in the upper part of the tower 4, in particular in the upper third of the tower 4. The arrangement of the electrolytic unit 3 at this height is beneficial, as the higher the electrolytic unit 3 is placed, the lower the salt and water content in the air, thereby reducing the corrosion of the components of the electrolytic unit 3. Additionally, the arrangement of the electrolytic unit 3 inside the tower 4 increases the protection of the electrolytic unit 3 from harsh weather conditions, for example from rain, which might damage the electrical components. Additionally, the constant exposure to an open atmosphere containing salt accelerates the corrosion, so the housing of the electrolytic unit 3 inside the tower 4 is beneficial to avoid a faster corrosion, as it is the case in electrolytic units 3 installed on electrolytic unit platforms 32 as known in the prior art. The need of big containers protecting the electrolytic unit 3 from the environment can be avoided if the electrolytic unit 3 is housed inside the tower 4.

The electrolytic unit 3 is installed on two floor plates 41. On the lower one, the desalination unit 11 is installed, which is coupled to the fluid supply assembly 21. On the upper one, the electrolytic device 12 is installed, which is coupled to the desalination unit 11 for the supply of desalinated water 14. Both the electrolytic device 12 and the desalination unit 11 are electrically coupled to the generator 2 by means of an electric connection 7, wherein the electric connection 7 is long enough to allow for a relative movement between the nacelle 6 and the tower 4 during yawing. This is advantageous during yawing, as the generator 2 rotates and the electrolytic unit 3 is static, as it is coupled to the tower 4. Supports for the electric connection 7 are arranged at the tower 4 so that the cables do not touch the ground and to avoid any injuries of stepping on cables.

The hydrogen 8 generated by the electrolytic unit 3 is brought to the hydrogen output 15 of the wind turbine 1, which can be accomplished by a pipeline or a channel. The tower 4 can have a second opening for the hydrogen output 15 at the tower 4, as it is shown in this figure, or use the already given opening of the fluid supply assembly for the hydrogen output 5.

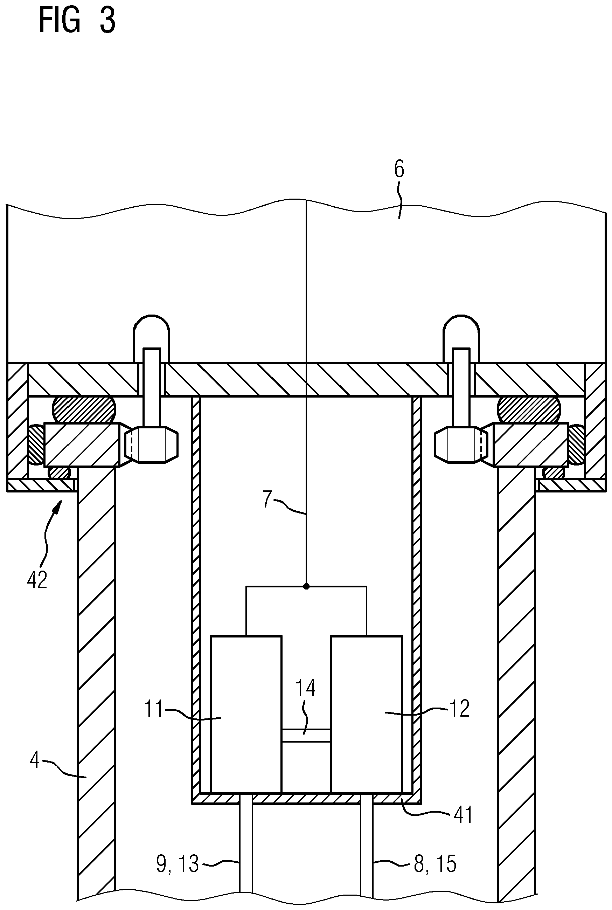

Figure 3 shows a wind turbine 1 according to another embodiment of the invention comprising an electrolytic unit 3 housed inside the tower 4 and suspended from the yaw bearing 42.

A cross-sectional view of a yaw bearing 42 with an inner yaw drive is shown in this figure. The yaw bearing 42 allows the nacelle 6 to rotate relative to the tower 4 by means of a plurality of rolling or sliding elements. In this case, a plurality of sliding elements is used.

The electrolytic unit 3 is suspended from the yaw bearing 42 component coupled to the nacelle 6 and therefore, the electrolytic unit 3 is rotatably coupled to the nacelle 6. The electrolytic unit 3 is arranged on a floor plate 41. A flexible hose can be used as the fluid connection 22 of the fluid supply assembly 21 and/or as the connection of the electrolytic unit 3 with the hydrogen output 15, as during yawing a relative movement of the electrolytic unit 3 with the tower 4 and the components coupled to the tower 4 will occur.

### Reference List

- 1: Wind turbine
- 2: Generator
- 3: Electrolytic unit
- 4: Tower
- 5: Base
- 6: Nacelle
- 7: Electrical connection
- 8: Hydrogen
- 9: Input fluid

- 11: Desalination unit
- 12: Electrolytic device
- 13: Saltwater
- 14: Desalinated water
- 15: Hydrogen output

- 21: Fluid supply assembly
- 22: Fluid connection
- 23: Fluid inlet
- 24: Pump

- 31: Water level
- 32: Electrolytic unit platform

- 41: Floor plate
- 42: Yaw bearing

## Claims

1. A wind turbine (1) comprising
a generator (2),
a base (5),
a nacelle (6),
a tower (4) having a first end mounted to the base (5) and a second end supporting the nacelle (6), and
an electrolytic unit (3) electrically powered by the generator (2) to produce hydrogen (6) from an input fluid (9), in particular water,
wherein the electrolytic unit (3) is electrically coupled to the generator (2) by means of an electric connection (7), **characterized in that** the electrolytic unit (3) is housed inside the tower (4).

2. The wind turbine (1) according to claim 1, **characterized in that** the electrolytic unit (3) is housed in the upper part of the tower (4), in particular in the upper third of the tower (4).

3. The wind turbine (1) according to claim 1 or 2, **characterized in that** the electrolytic unit (3) is suspended from a yaw bearing (42).

4. The wind turbine (1) according to any of the preceding claims, **characterized in that** the electrolytic unit (3) is rotatably coupled to the nacelle (6).

5. The wind turbine (1) according to claims 1 to 3, **characterized in that** the electrolytic unit (3) is coupled to and supported by the tower (4).

6. The wind turbine (1) according to claim 5, **characterized in that** the electric connection (7) is long enough to allow for a relative movement between the nacelle (6) and the tower (4) during yawing.

7. The wind turbine (1) according to any of the preceding claims, **characterized in that** the electrolytic unit (3) is supported on a floor plate (41).

8. The wind turbine (1) according to any of the preceding claims, **characterized in that** said wind turbine (1) is an offshore wind turbine erected in a body of water.

9. The wind turbine (1) according to claim 8, **characterized in that** the wind turbine (1) is configured as a floating wind turbine, wherein the base (5) is a floating, a semi-submerged or a submerged base platform.

10. The wind turbine (1) according to claim 8 or 9, **characterized in that** said wind turbine (1) further comprises a fluid supply assembly (21) for supplying the input fluid (9) from a fluid inlet (23) arranged below a water level (31) to the electrolytic unit (3), wherein the fluid inlet (23) comprises an opening in the base (5) or in the tower (4) below the water level (31) through which the input fluid (9) is transported to the electrolytic unit (3).

11. The wind turbine (1) according to claims 1 to 8, **characterized in that** the base (5) is a foundation (34) such as a monopile.

12. Method of producing hydrogen by means of a wind turbine (1) according to any of the preceding claims, the method comprising the step of supplying electrical power from the generator (2) to the electrolytic unit (3) housed inside the tower (4) to produce hydrogen.
